# EUROPEAN PATENT APPLICATION

(11) **EP 4 730 408 A1**
(43) Date of publication of application: **22.04.2026**
(21) Application number: 25201874.2
(22) Date of filing: 12.09.2025
(51) Int. Cl.: H01M 4/04, H01M 4/139, B22F 3/18, B29C 43/24, B30B 15/30

(54) **DRY ELECTRODE FABRICATING APPARATUS**

(30) Priority: 16.10.2024 KR 20240140887
(71) Applicant: SAMSUNG SDI CO., LTD., Yongin-si, Gyeonggi-do 17084 (KR)
(72) Inventor: KWON, Il Kyong, 16678 Suwon-si (KR); KIM, Min Sic, 16678 Suwon-si (KR); YU, Hong Ryeol, 16678 Suwon-si (KR); LEE, Dong Geun, 16678 Suwon-si (KR); MOON, Jeung Gi, 16678 Suwon-si (KR)
(74) Representative: Marks & Clerk LLP

(57) **Abstract**

A dry electrode fabricating apparatus includes a chute including a chute housing. The chut housing includes an inner space in which an electrode powder is accommodated, an inlet port through which the electrode powder is input to the inner space, and an outlet port through which the electrode powder is discharged from the inner space. The chute also includes a plurality of spacers that divide the outlet port into a plurality of outlets and are coupled to the chute housing. The apparatus also includes a pair of calender rolls between which a gap is formed in which the electrode powder discharged through the outlets passes and is compressed into columns of electrode films.

## Description

### BACKGROUND

### 1. Field of the Disclosure

The present disclosure relates to a dry electrode fabricating apparatus.

### 2. Discussion of Related Art

Electrodes of secondary batteries may be wet electrodes and dry electrodes.

A wet electrode may be fabricated through a process preparing a slurry by mixing an electrode active material, a conductive material, and a binder with an organic solvent and drying the coated current collector to remove the organic solvent. The slurry is then coated on a current collector.

A dry electrode may be fabricated by mixing an electrode active material, a conductive material, and a binder without an organic solvent and coating the mixed material to a current collector. Since the organic solvent is not used for fabricating the dry electrode, the dry electrode is eco-friendly. And since an apparatus and process for drying a slurry are not required, costs for fabricating the electrode can be reduced and productivity can be improved.

The aforementioned information disclosed in this section is merely for enhancement of understanding of the background technology of the present disclosure may contain information that does not constitute the related or prior art.

### SUMMARY OF THE DISCLOSURE

The present disclosure is directed to providing a dry electrode fabricating apparatus capable of producing a dry electrode including electrode films in a plurality of columns and reducing an input amount of an electrode powder.

However, technical objectives to be achieved by the present disclosure are not limited to the above-described objectives, and other objectives will be clearly understood by those skilled in the art through the following description of the disclosure.

In accordance with one aspect of the present disclosure, there is provided a dry electrode fabricating apparatus including a chute including a chute housing, with the chute housing including an inner space in which an electrode powder can be accommodated, an inlet port through which the electrode powder can be input to the inner space, and an outlet port through which the electrode powder can be discharged from the inner space, and with the chute also including a plurality of spacers that divide the outlet port into a plurality of outlets and are coupled to the chute housing, and a pair of calender rolls between which a gap is formed in which electrode powder discharged through the outlets of the chute may pass and be compressed into columns of electrode films.

The chute housing may include a pair of first walls extending in a longitudinal direction of the pair of calender rolls and a second wall that connects the first walls.

The spacers may include a first spacer including end portions connected to the first walls and at least one second spacer connected to the first walls between the second wall and the first spacer.

A position of an end of the first spacer in a direction from the inlet port toward the outlet port may be further from the outlet port than an end of the second spacer is from the outlet port in the direction from the inlet port toward the outlet port.

The second spacer may have a thickness in a longitudinal direction that the calender rolls extend, and the thickness of the second spacer increases toward the outlet port.

The spacers may be disposed apart from each other in a longitudinal direction of the calender rolls.

The spacers may be detachably coupled to the chute housing.

The chute housing may further include a stopper configured to stop movement of the spacers toward the pair of calender rolls.

The spacers may be detachably coupled to the chute housing, the chute housing may include spacer brackets extending from one of the first walls, and each of the spacers may include a bracket coupler coupled to one of the spacer brackets.

The number of the spacer brackets may be greater than the number of the spacers, and the spacers may be coupled to some spacer brackets of the plurality of spacer brackets.

The spacer brackets and the bracket couplers may extend in a direction from the inlet port toward the outlet port.

Each of the spacer brackets may include a support rail protruding from the first wall and extending from the inlet port toward the outlet port, and a bent rail extending from the support rail in a longitudinal direction of the support rail, wherein each of the bracket couplers may include a slot in which one of the bent rails is fitted and which extends in a longitudinal direction of the bent rail.

Each of the spacer brackets may include a fitting rail protruding from the first wall and extending in the direction from the inlet port toward the outlet port, and each of the bracket couplers may include a wall facing slot that is formed in a surface of the spacer, in which the fitting rail is fitted, and which extends in a longitudinal direction of the fitting rail.

The second wall may include a pair of curved corners facing outer circumferential surfaces of the calender rolls.

The second wall may further include a central protrusion protruding toward the gap between the pair of calender rolls, and shapes of the curved corners may be symmetric to each other with the central protrusion interposed between the curved corners.

At least some of the above and other features of the invention are set out in the claims.

### BRIEF DESCRIPTION OF THE DRAWINGS

The above and other objects, features and advantages of the present disclosure will become more apparent to those of ordinary skill in the art by describing example embodiments thereof in detail with reference to the accompanying drawings.
FIG. 1 is a configuration diagram illustrating a dry electrode fabricating apparatus according to an embodiment of the present disclosure.
FIG. 2 is a perspective view illustrating a chute and a pair of calender rolls of the dry electrode fabricating apparatus shown in FIG. 1.
FIG. 3 is a perspective view illustrating one example of a dry electrode.
FIG. 4 is an exploded perspective view illustrating the chute of FIG. 2.
FIG. 5 is a plan view illustrating a chute housing.
FIG. 6 is a front view illustrating a first spacer.
FIG. 7 is a front view illustrating a second spacer.
FIG. 8 is a cross-sectional view illustrating the chute along line A-A of FIG. 2.
FIG. 9 is a cross-sectional view illustrating a chute included in a dry electrode fabricating apparatus according to another embodiment of the present disclosure.

### DETAILED DESCRIPTION OF EXAMPLE EMBODIMENTS

Herein, embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein includes all subranges of the same numerical precision subsumed within the recited range. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

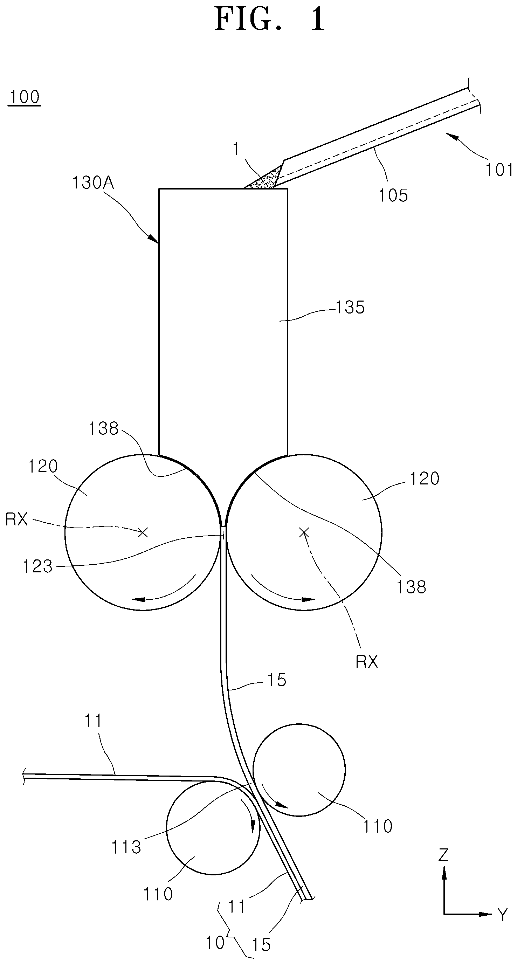

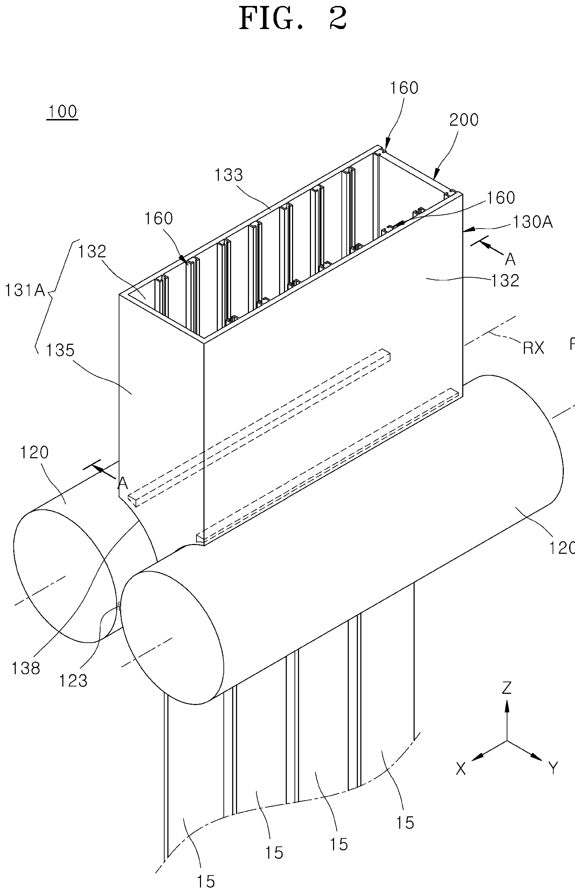

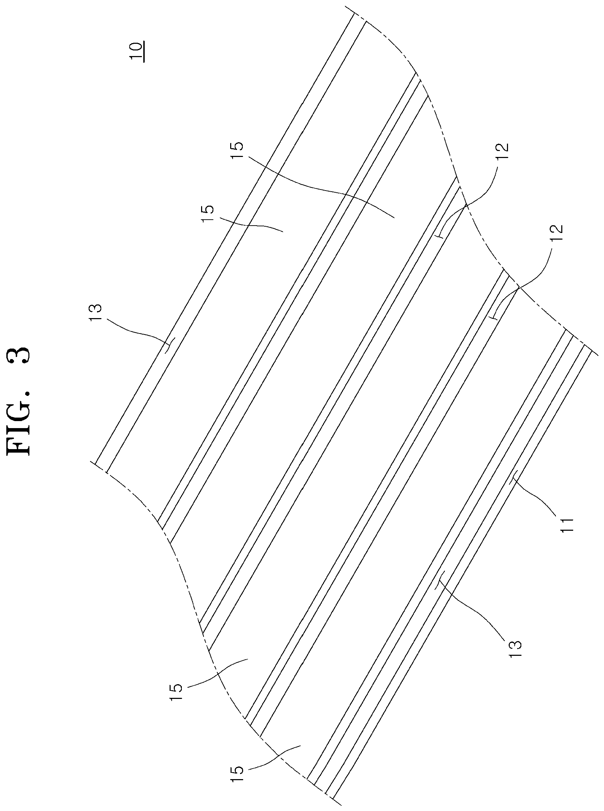

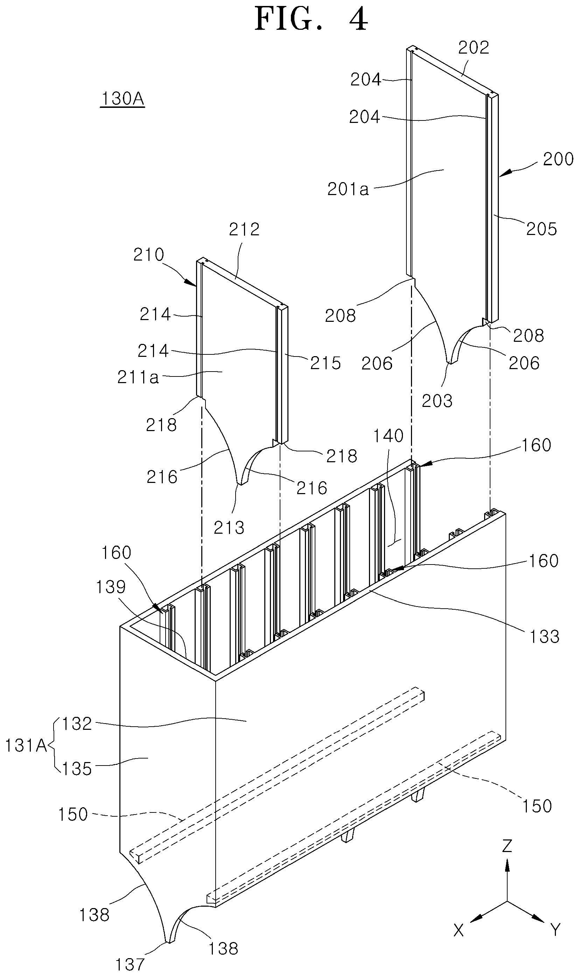

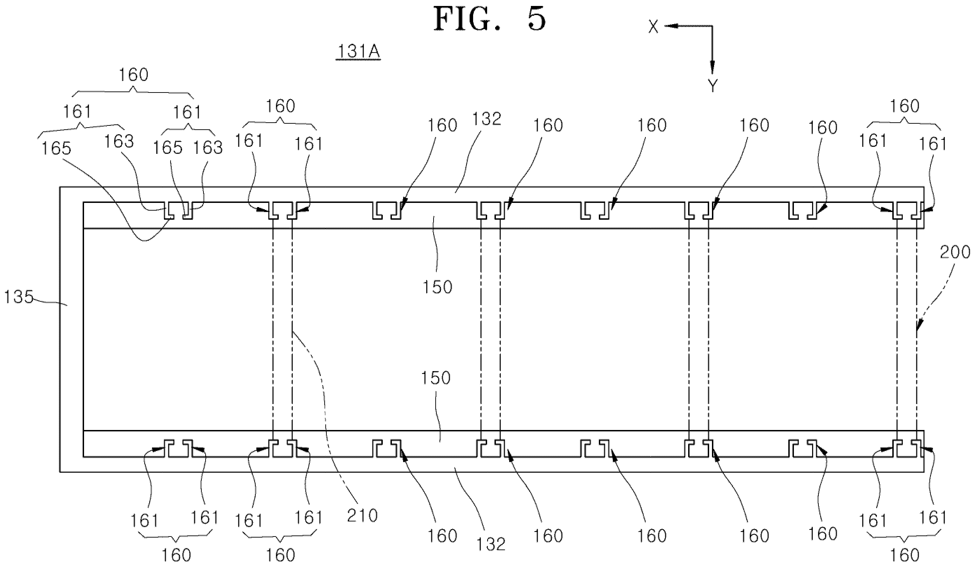

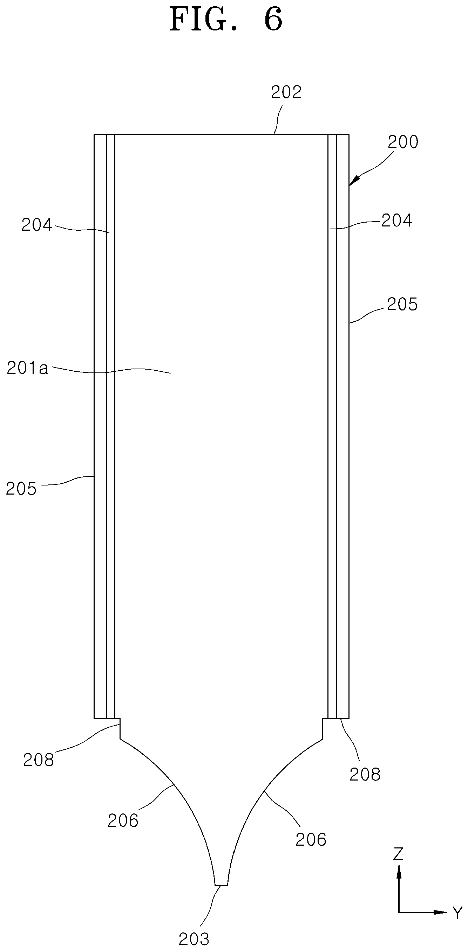

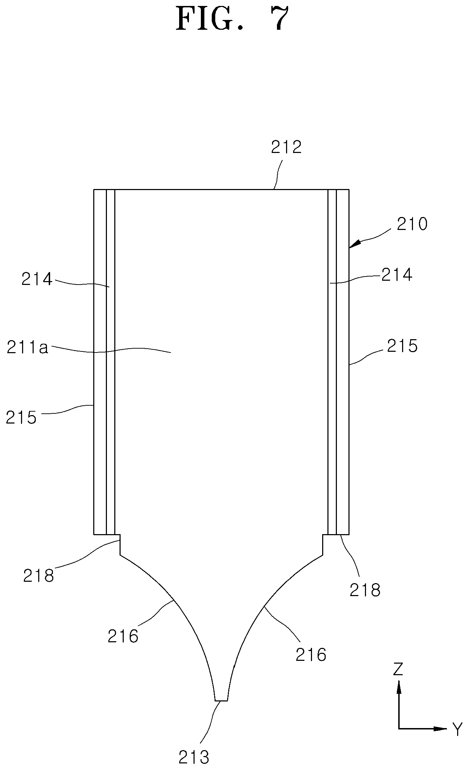

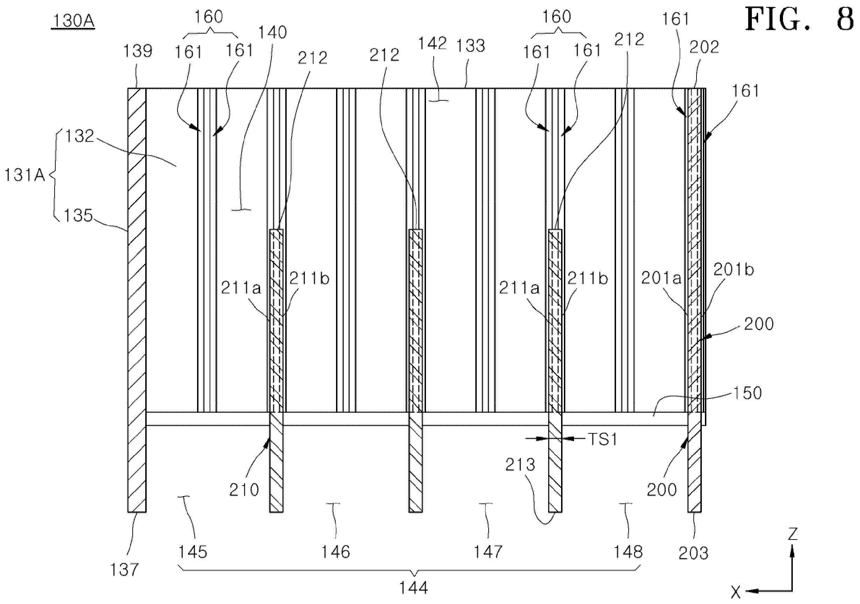

FIG. 1 is a configuration diagram illustrating a dry electrode fabricating apparatus according to an embodiment of the present disclosure, and FIG. 2 is a perspective view illustrating a chute and a pair of calender rolls of FIG. 1. FIG. 3 is a perspective view illustrating an example of a dry electrode, and FIG. 4 is an exploded perspective view illustrating the chute of FIG. 2. FIG. 5 is a plan view illustrating a chute housing of the chute of FIG. 4, and FIG. 6 is a front view illustrating a first spacer of the chute of FIG. 4. FIG. 7 is a front view illustrating a second spacer of FIG. 4, and FIG. 8 is a cross-sectional view illustrating the chute along line A-A of FIG. 2.

Referring to FIGS. 1 to 8, a dry electrode fabricating apparatus 100 according to an embodiment of the present disclosure is an apparatus for fabricating a dry electrode 10 including electrode films 15 in a plurality of columns and an electrode body 11 to which the electrode films 15 are attached and by which the electrode films 15 are supported.

An electrode powder 1 in which an electrode active material, a conductive material, and a binder are mixed may pass between a pair of calender rolls 120 and may be compressed to thereby fabricate the electrode films 15. In an example, the electrode body 11 may be a foil formed of a metal material such as copper.

The dry electrode 10 may include the plurality of spaced apart columns of electrode films. The electrode films 15 may be attached to a surface of the current collector 11. The dry electrode 10 may include non-coated portions 12 and 13 on which the electrode films 15 are not provided such that a surface of the current collector 11 is exposed. The non-coated portions 12 and 13 may include a first non-coated portion 12 through which the current collector 11 is exposed between a pair of adjacent electrode films 15 and second non-coated portions 13 at sides/ends of the current collector 11 in a width direction.

The dry electrode fabricating apparatus 100 includes a chute 130Aand the pair of calender rolls 120. The chute 130A includes a chute housing 131A and a plurality of spacers 200 and 210.

The chute housing 131A includes an inner space 140 in which the electrode powder 1 is accommodated, an inlet port 142 through which the electrode powder 1 is input to the inner space 140, and an outlet port 144 through which the electrode powder 1 is discharged from the inner space 140. The plurality of spacers 200 and 210 divide the outlet port 144 into a plurality of outlets 145, 146, 147, and 148.

The pair of calender rolls 120 are disposed in parallel such that a gap 123 is formed between the calender rolls 120. The electrode powder 1 discharged through the plurality of outlets 145, 146, 147, and 148 passes between the pair of calender rolls 120 to be compressed into the columns of electrode films 15.

The calender rolls 120 extend in a first direction (the x direction shown in FIG. 2). The gap 123 extends in a second direction (the y direction shown in FIG. 2) that is perpendicular to calender roll axes RX about which the calender rolls 120 rotate.

The inlet port 142 and the outlet port 144 are disposed in a third direction (the z direction shown in FIG. 2). The third direction may be perpendicular to the first direction and the second direction. For example, the third direction may be a vertical/gravity direction.

In an example, the first direction and the second direction may be a horizontal direction perpendicular to the direction of gravity. For example, the first direction may be a front-rear direction, and the second direction may be a left-right direction. In FIGS. 1 to 8, the first direction may be the X-axis, the second direction may be the Y-axis, and the third direction may be the Z-axis.

The dry electrode fabricating apparatus 100 may further include an electrode powder supplier 101 and a lamination roll 110. The electrode powder supplier 101 may supply the electrode powder 1 to the inlet port 142. The electrode powder supplier 101 may include a vibration and guide plate 105 that vibrates the electrode powder 1 and guides the electrode powder 1 toward the inlet port 142.

The vibration and guide plate 105 may extend obliquely downward such that a lower end portion of the vibration and guide plate 105 is provided to the inlet port 142. The electrode powder 1 may pass through the vibration and guide plate 105 to diffuse in the first direction and freely fall from the lower end portion of the vibration and guide plate 105 to the inlet port 142.

The lamination roll 110 attaches the columns of electrode films 15 to the current collector 11. The lamination roll 110 may be provided as a pair of lamination rolls 110. The pair of lamination rolls 110 may be disposed in parallel such that a gap 113 is formed between the lamination rolls 110. The pair of lamination rolls 110 may extend parallel to the calender rolls 120, in other words, in the first direction. And the pair of lamination rolls 110 may be spaced from the pair of calender rolls 120. The current collector 11 and the electrode films 15 in the plurality of columns may pass through the gap 113 between the pair of lamination rolls 110 to press and attach the columns of electrode films 15 to the current collector 11.

The chute housing 131A may include a pair of first walls 132 and a second wall 135. The pair of first walls 132 may extend in a longitudinal direction of the pair of calender rolls 120, that is, in the first direction. The pair of first walls 132 may be spaced apart from each other in in the second direction.

The second wall 135 may connect sides of the first walls 132 in a longitudinal direction. For example, the second wall 135 may connect corners of ends of the first walls 132 in the first direction. Accordingly, sides of the first walls 132 in the longitudinal direction are connected to the second wall 135 to thereby form a closed structure at one end of the chute housing 131A. Each of the first walls 132 may be plate shaped in an ZX plane, and the second wall 135 may be plate shaped in an YZ plane. For example, the first wall 132 may be substantially rectangular shaped when viewed in the second direction from outside of the chute housing 131A.

The second wall 135 may include a pair of curved corners 138 and a central protrusion 137. The pair of curved corners 138 and the central protrusion 137 may be provided in a lower end portion of the second wall 135 in the third direction. The pair of curved corners 138 face outer circumferential surfaces of the pair of calender rolls 120. The central protrusion 137 may protrude toward the gap 123 between the pair of calender rolls 120. For example, the central protrusion 137 may protrude downward in the third direction between the pair of curved corners 138. The curved corners 138 may be symmetrical to each other with the central protrusion 137 interposed between the curved corners. Each of the curved corners 138 may have a concave shape to form a uniform gap between the curved corner 138 and the facing outer circumferential surface of one of the calender rolls 120.

A gap between the curved corners 138 and the surfaces of the calendar roll 120 may be less than a particle size of the electrode powder 1 to thereby prevent the electrode powder 1 from leaking through the gap to outside of the chute housing 131A.

The plurality of spacers 200 and 210 may include a first spacer 200 and a second spacer 210. The first spacer 200 may include two side end portions 205 in the second direction which are connected to the sides of the first walls 132 in the longitudinal/first direction. If no first spacer 200 is provided, an opening is formed between the first walls 132 in the longitudinal direction, and the electrode powder 1 may leak to outside of the chute housing 131A without being accommodated in the inner space 140.

The first spacer 200 may have a plate shape in a YZ plane. The first spacer 200 may include a pair of curved corners 206 and a central protrusion 203. The curved corners 206 and the central protrusion 203 may be provided in a lower end portion of the first spacer 200 in the third direction. The pair of curved corners 206 face the outer circumferential surfaces of the calender rolls 120. The central protrusion 203 may protrude toward the gap 123 between the calender rolls 120. For example, the central protrusion 203 may protrude downward in the third direction between the curved corners 206. The curved corners 206 may be symmetrical to each other with the central protrusion 203 interposed between the curved corners 206. Each of the curved corners 206 may have a concave shape to form a unform gap between the curved corner 206 and the facing outer circumferential surface of the calender roll 120. A size of the gap may be less than the particle size of the electrode powder 1 to prevent the electrode powder 1 from moving through the gap between the curved corner 206 and the outer circumferential surface of the calender roll 120 in the longitudinal direction of the calender roll 120, that is, from passing through the first spacer 200 in the first direction. Accordingly, the electrode powder 1 may not pass through the gaps between the first spacer 200 and the calender rolls 120, and, thus, not leak to outside of the chute housing 131A.

The second spacer 210 includes two side end portions 215 in the second direction that are connected to the first walls 132 between the second wall 135 and the first spacer 200. The second spacer 210 be plate shaped in a YZ plane. The second spacer 210 may include a pair of curved corners 216 and a central protrusion 213. The pair of curved corners 216 and the central protrusion 213 may be formed in a lower end portion of the second spacer 210 in the third direction. The curved corners 216 face the outer circumferential surfaces of the pair of calender rolls 120. The central protrusion 213 may protrude toward the gap 123 between the pair of calender rolls 120. For example, the central protrusion 213 may protrude downward in the third direction. The curved corners 216 may be symmetrical to each other with the central protrusion 213 interposed between the curved corners 216. Each of the curved corners 216 may have a concave shape to form a uniform gap between the curved corner 216 and the facing outer circumferential surface of the calender roll 120. A size of the gap may be less than the particle size of the electrode powder 1 to prevent the electrode powder 1 from moving through the gap in the longitudinal direction of the calender roll 120, that is, from leaking through the gap to outside of the chute housing 130A.

The spacers 200 and 210 may be disposed apart from each other in the longitudinal/first direction of the calender roll 120. Among the spacers 200 and 210, the spacer 210, which is closest to the second wall 135, may be spaced from the second wall 135 in the first direction.

The outlet port 144 may be divided into the plurality of outlets 145, 146, 147, and 148 by the second wall 135 and the spacers 200 and 210. The plurality of outlets 145, 146, 147, and 148 may be provided between the second wall 135 and the second spacer 210 closest thereto, between a pair of second spacers 210 spaced apart from each other, and between the first spacer 200 and the second spacer 210 closest thereto.

In the example embodiment of the present disclosure illustrated in FIGS. 2, 4, 5, and 8, a first outlet 145 may be defined by the second wall 135 and the second spacer 210 closest thereto, and a fourth outlet 148 may be defined by the first spacer 200 and the second spacer 210 closest thereto. A second outlet 146 and a third outlet 147 between the first outlet 145 and the fourth outlet 148 may be defined by three second spacers 210 disposed apart from each other in the first direction.

A position of one end 202 of the first spacer 200 in the third direction from the inlet port 142 toward the outlet port 144, may be further spaced from the outlet port 144 than a position that one end 212 of the second spacers 210 are from the outlet port 144. For example, with reference to FIGS. 2, 4, and 8, a height of the upper end 202 of the first spacer 200 may be greater than a height of the upper end 212 of the second spacer 210 in a plus (+) direction of the Z-axis.

In the third direction, a location of an end 133 of the first wall 132, a location an end 139 of the second wall 135, and a location of the end 202 of the first spacer 200 may be the same. For example, as shown in FIGS. 2, 4, and 8, a height of the upper end 133 of the first wall 132, a height of the upper end 139 of the second wall 135, and a height of the upper end 202 of the first spacer 200 in the plus (+) direction of the Z-axis may be the same. If some heights of the height of the upper end 133 of the first wall 132, the height of the upper end 139 of the second wall 135, and the height of the upper end 202 of the first spacer 200 are less than others of the heights, some of the electrode powder 1 falling from the vibration and guide plate 105 of the electrode powder supplier 101 may deviate from the inner space 140 of the chute housing 131A and fall outside of the chute housing 131A. In addition, if the height of the upper end 212 of the second spacer 210 is greater than or equal to the height of the upper end 133 of the first wall 132, the height of the upper end 139 of the second wall 135, and the height of the upper end 202 of the first spacer 200, the electrode powder 1 falling to the inner space 140 through the inlet port 142 may be unevenly input to some of the outlet ports 145, 146, 147, and 148 rather than being uniformly dispersed. In such a case, uniformity of quality of the electrode films 15 in the plurality of columns may be reduced and a defect rate may increase. But the arrangement of the present disclosure prevents such non-uniformity and thereby reduces defect rates.

The spacers 200 and 210 may be detachably coupled to the chute housing 131A. In this regard, the chute housing 131A may include a spacer bracket 160 on the first wall 132. The spacers 200 and 210 may include bracket couplers 204 and 214 coupled to the spacer bracket 160. The spacer bracket 160 and the bracket couplers 204 and 214 may extend from the inlet port 142 toward the outlet port 144, that is, in the third direction. The spacer bracket 160 may be provided as a plurality of spacer brackets 160 on each of the first walls 132 such that the number of the plurality of spacer brackets 160 is equal to or greater than the number of the spacers 200 and 210. The spacer brackets 160 may be disposed apart from each other in the first direction. The spacer brackets 160 provided on one first wall 132 may correspond one-to-one to the spacer brackets 160 provided on the other first wall 132.

Accordingly, the chute housing 131A may include pairs of spacer brackets 160. The spacers 200 and 210 may be coupled to spacer brackets 160 to thereby be attached to and detached from the spacer brackets 160.

A chute housing of a dry electrode fabricating apparatus according to another embodiment may include spacer brackets on only one of the first walls, and spacers may be coupled to spacer brackets provided on the one first wall.

Each of the spacer brackets 160 may include slide rails 161 disposed apart from each other in the first direction such that the spacers 200 and 210 are fitted between the pair of slide rails 161. Each of the slide rails 161 may include a support rail 163 and a bent rail 165. The support rail 163 may protrude from the first wall 132 and extend from the inlet port 142 toward the outlet port 144, that is, in the third direction. The bent rail 165 may be bent from the support rail 163 and extend in a longitudinal direction of the support rail 163, that is, in the third direction. A pair of bent rails 165 included in the pair of slide rails 161 may protrude in a front-rear direction, that is, toward each other and in the first direction, with the bent rails 165 spaced from each other.

The bracket couplers 204 and 214 of the spacers 200 and 210 may include slots which are fitted to the bent rails 165 and extend in a longitudinal direction of the bent rails 165, that is, in the third direction. For example, the first spacer 200 may include the bracket couplers 204, that is, the slots, disposed in a front surface 201a and a rear surface 201b at end portions 205 in the second direction. The second spacer 210 may include the bracket couplers 214, that is, the slots, disposed in a front surface 211a and a rear surface 211b at end portions 215 in the second direction.

With the above-described structure, a worker may align the first spacer 200 or the second spacers 210 with pairs of spacer brackets 160 in the third direction and push the first spacer 200 or the second spacers 210 into the of spacer brackets 160 to install the first spacer 200 or the second spacers 210 in the chute housing 131A. The number and a width of the electrode films 15 that pass between and are discharged from the calender rolls 120 may be changed by changing the location of the first spacer 200 and/or the number and installation locations of the second spacers 210.

The chute housing 131A may include stoppers 150 which block the spacers 200 and 210 from moving in a direction toward the calender rolls 120. If no stopper 150 is provided and the spacers 200 and 210 are moved downward from above in the third direction to be coupled to the spacer brackets 160, the spacers 200 and 210 may move too far and collide with the calender rolls 120, and accordingly, the spacers 200 and 210 and/or the calender rolls 120 may be damaged. A collision between the calender rolls 120 and the spacers 200 and 210 can be prevented by the stoppers 150.

The stoppers 150 may protrude from lower end portions of the first walls 132 toward the inner space 140. The spacers 200 and 210 may include collision surfaces 208 and 218 configured to contact the stoppers 150 such that movement of the spacers 200 and 210 in the third direction is blocked. For example, the collision surfaces 208 and 218 may be provided in dents that are recessed to form steps in the curved corners 206 and 216.

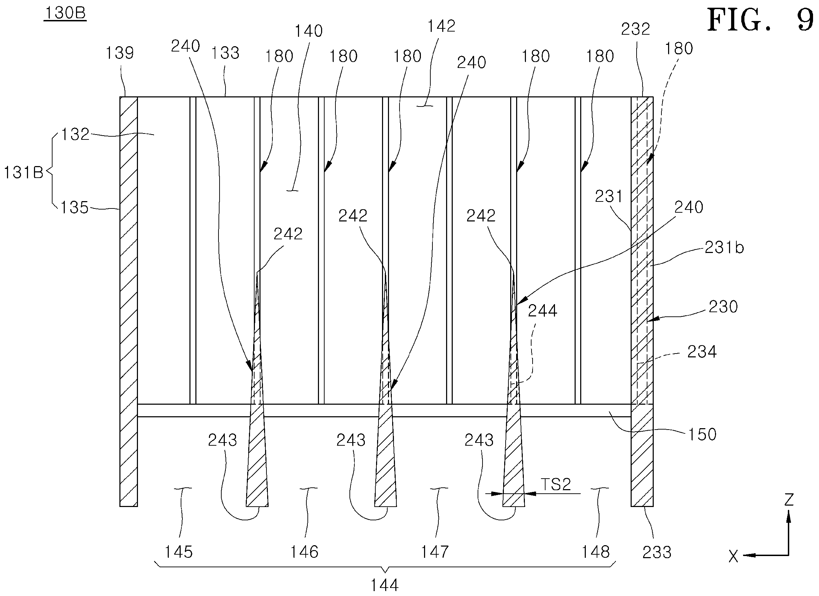

FIG. 9 is a cross-sectional view illustrating a chute included in a dry electrode fabricating apparatus according to another embodiment of the present disclosure. Referring to FIGS. 1, 2, 4, and 9, the dry electrode fabricating apparatus according to another embodiment of the present disclosure may include a chute 130B, a pair of calender rolls 120, an electrode powder supplier 101, and a pair of lamination rolls 110.

The chute 130B includes a chute housing 131B, a first spacer 230, and a plurality of second spacers 240. The chute housing 131B includes a pair of first walls 132, a second wall 135, and a plurality of spacer brackets 180. The structures of the pair of calender rolls 120, the electrode powder supplier 101, the pair of lamination rolls 110, the first walls 132, and the second wall 135 may be the same as those included in the dry electrode fabricating apparatus 100 described above with reference to FIGS. 1 to 8, and are indicated with the same reference numerals.

The first spacer 230 includes two side end portions connected to sides of the first walls 132, which are spaced apart from each other and with which the second wall 135 is continuous in a longitudinal direction of the pair of first walls 132, that is, in the first direction. The second spacers 240 each include two side end portions connected to the first walls 132 between the second wall 135 and the first spacer 200. The two side end portions of each of the second spacers 240 may be two side end portions in the second direction.

A thickness TS2 of the second spacer 240 in a longitudinal direction of the calender roll 120, that is, the first direction, may increase (for example, gradually) toward an outlet port 144. One side surface 241a of the second spacer 240 facing the second wall 135 and the other side surface 241b opposite to the one side surface 241a may be symmetric to each other. However, the thickness between a front surface 231a and a rear surface 231b of the first spacer 230 in a third direction may be constant.

The one side surface 241a may be a front surface of the second spacer 240, and the other side surface 241b may be a rear surface of the second spacer 240. As illustrated in FIG. 9, a vertical cross-section of the second spacer 240 may be an isosceles triangular shape. An upper end 242 of the second spacer 240 may be a pointed corner formed by the front surface 241a and the rear surface 241b, which intersect to form an acute angle.

A lower end 243 of the second spacer 240 extending to a gap 123 between the pair of calender rolls 120 may be a portion of which a thickness TS2 is greatest in the second spacer 240. Accordingly, a width of each of a plurality of outlets 145, 146, 147, and 148 in the third direction may decrease toward the gap 123. However, in the case of the second spacer 210 included in the dry electrode fabricating apparatus 100 according to an embodiment of the present disclosure illustrated in FIG. 8, a thickness TS1 between a front surface 211a and a rear surface 211b in the third direction may be constant. Accordingly, a width of each of the plurality of outlets 145, 146, 147, and 148 in the direction parallel to the third direction may be constant.

The spacer bracket 180 may include fitting rails protruding from the first wall 132 and extending from an inlet port 142 toward the outlet port 144, that is, parallel to the third direction. Bracket couplers 234 and 244 of the first spacer 230 and the second spacer 240 may be formed on surfaces of the spacers 230 and 240 facing the first wall 132. The bracket couplers 234 and 244 may include wall facing slots to which the fitting rails are fitted and which extend in a longitudinal direction of the fitting rails, that is, the third direction. The surfaces of the spacers 230 and 240 facing the first walls 132 may be end surfaces of the spacers 230 and 240 in the second direction.

According to the present disclosure, electrode films are formed by compressing an electrode powder and are simultaneously discharged in a plurality of columns, which improves productivity.

According to the present disclosure, trimming is not performed on one electrode film to form electrode films in a plurality of columns. Thus, the amount of scrap removed from the electrode films can be reduced, and costs for a dry electrode can be reduced.

According to the present disclosure, the size of a dry electrode fabricating apparatus for fabricating a dry electrode including electrode films in a plurality of columns can be reduced, and costs for the dry electrode fabricating apparatus can also be reduced.

However, aspects and features of the present disclosure are not limited to those described above and other aspects and features not mentioned will be clearly understood by those skilled in the art from the detailed description given above.

Although the present disclosure has been described with reference to some embodiments and drawings illustrating aspects thereof, the present disclosure is not limited thereto. Various modifications and variations can be made by a person skilled in the art to which the present disclosure belongs within the scope of the disclosure.

## Claims

1. A dry electrode fabricating apparatus comprising:
a chute including a chute housing, the chute housing including an inner space in which an electrode powder can be accommodated, an inlet port through which the electrode powder can be input to the inner space, and an outlet port through which the electrode powder can be discharged from the inner space, the chute also including a plurality of spacers that divide the outlet port into a plurality of outlets and are coupled to the chute housing; and
a pair of calender rolls between which a gap is formed in which electrode powder discharged through the outlets of the chute may pass and be compressed into columns of electrode films.

2. The dry electrode fabricating apparatus as claimed in claim 1, wherein the chute housing includes a pair of first walls extending in a longitudinal direction of the pair of calender rolls; and
a second wall that connects the first walls.

3. The dry electrode fabricating apparatus as claimed in claim 2, wherein the spacers include:
a first spacer including end portions connected to the first walls; and
at least one second spacer connected to the first walls at a position between the second wall and the first spacer.

4. The dry electrode fabricating apparatus as claimed in claim 3, wherein a position of an end of the first spacer in a direction from the inlet port toward the outlet port is further from the outlet port than an end of the second spacer is from the outlet port in the direction from the inlet port toward the outlet port.

5. The dry electrode fabricating apparatus as claimed in claim 3 or 4, wherein the second spacer has a thickness in a longitudinal direction in which the calender rolls extend, and the thickness of the second spacer increases toward the outlet port.

6. The dry electrode fabricating apparatus as claimed in any preceding claim, wherein the spacers are disposed apart from each other in a longitudinal direction of the calender rolls.

7. The dry electrode fabricating apparatus as claimed in any preceding claim, wherein the spacers are detachably coupled to the chute housing.

8. The dry electrode fabricating apparatus as claimed in claim 7, wherein the chute housing further includes a stopper configured to stop movement of the spacers toward the calender rolls.

9. The dry electrode fabricating apparatus as claimed in claim 2 or any claim dependent on claim 2, wherein the spacers are detachably coupled to the chute housing,
wherein the chute housing includes spacer brackets extending from one of the first walls, and
wherein each of the spacers includes a bracket coupler coupled to one of the spacer brackets.

10. The dry electrode fabricating apparatus as claimed in claim 9,
wherein the number of the spacer brackets is greater than the number of the spacers, and
wherein the spacers are coupled to some spacer brackets of the plurality of spacer brackets.

11. The dry electrode fabricating apparatus as claimed in claim 9 or 10, wherein the spacer brackets and the bracket couplers extend in a direction from the inlet port toward the outlet port.

12. The dry electrode fabricating apparatus as claimed in claim 11, wherein each of the spacer brackets includes:
a support rail protruding from the one of the first walls and extending from the inlet port toward the outlet port; and
a bent rail extending from the support rail in a longitudinal direction of the support rail, and
wherein each of the bracket couplers includes a slot in which one of the bent rails is fitted and which extends in a longitudinal direction of the bent rail.

13. The dry electrode fabricating apparatus as claimed in claim 11 or 12, wherein each of the spacer brackets includes a fitting rail protruding from the one of the first walls and extending in the direction from the inlet port toward the outlet port, and
wherein each of the bracket couplers includes a wall facing slot that is formed in a surface of the spacer, in which the fitting rail is fitted, and which extends in a longitudinal direction of the fitting rail.

14. The dry electrode fabricating apparatus as claimed in claim 2 or any claim dependent on claim 2, wherein the second wall includes a pair of curved corners facing outer circumferential surfaces of the calender rolls.

15. The dry electrode fabricating apparatus as claimed in claim 14, wherein the second wall further includes a central protrusion protruding toward the gap between the pair of calender rolls, and
wherein shapes of the curved corners are symmetric to each other with the central protrusion interposed between the curved corners.
